# EUROPEAN PATENT SPECIFICATION

(11) **EP 1 262 451 B1**
(45) Date of publication and mention of the grant of the patent: **30.03.2005**
(21) Application number: 02253829.2
(22) Date of filing: 30.05.2002
(51) Int. Cl.: C01B 17/54

(54) **Process for the preparation of sulfur dioxide**
Verfahren zur Herstellung von Schwefeldioxid
Procédé de fabrication d'anhydride sulfureux

(30) Priority: 31.05.2001 CL 12672001
(43) Date of publication of application: 04.12.2002
(73) Proprietor: Garcia, Javier Angel Perez, Los Angeles (CL)
(72) Inventor: Garcia, Javier Angel Perez, Los Angeles (CL)
(74) Representative: Isern-Jara, Jaime

(56) References cited:
- DE-A- 2 223 131
- GB-A- 350 739
- GB-A- 996 480
- US-A- 3 803 298

## Description

This invention relates to a process for the production of sulfur dioxide.

In the production of sulfur dioxide, sulfur is generally burned with dry air in a combustion chamber, to obtain a gas of 80% of nitrogen (v/v), 18% of SO₂ (v/v), the rest being oxygen and inert gases. This gas is then liquefied at a temperature of -50°C at a pressure of 0.8 bar. Greater pressure is required to liquefy this product at a higher temperature. The SO₂ recovery efficiency achieved through the liquefaction of this gas is approximately 75%. The rest of the non-liquefied SO₂ gas and the excess oxygen not burned and other inert gases must be eliminated from the process line. If this mix is discharged into the atmosphere, contamination is heavy and a costly neutralization procedure is required to reduce the contamination.

US-A-3,803,298 discloses a process for the continuous production of sulfur dioxide by combustion of sulfur with oxygen, in which the sulfur is burned in multiple stages with intermediate cooling. A portion of the sulfur dioxide is recycled to the first combustion stage to moderate the temperature therein.

The present invention relates to a process for obtaining sulfur dioxide by means of the combustion of sulfur and pure oxygen, which can produce gas having a concentration of SO₂ of 80% or more (v/v), without any inert gases to discharge into the atmosphere, which reduces environmental contamination to levels below those stipulated by environmental standards. That high concentration of SO₂ also allows for a better yield of SO₂ recovery by liquefaction.

In particular, a process is provided in which sulfur dioxide is produced by burning sulfur and pure oxygen diluted in recirculated combustive gas that has been previously cooled, in order to maintain combustion at less than 1200°C.

According to the present process, elemental sulfur is smelted and maintained at a temperature such that it has a viscosity suitable for pumping into a sulfur burner, preferably at about 140°C. The smelted sulfur undergoes combustion with pure oxygen diluted in cold combustion gas, in the combustion chamber of a boiler. This latter gas comes from recirculating a fraction of the combustion gas obtained, which may contain some unused oxygen. The purpose of this recirculation is to maintain the gas leaving the combustion chamber at a lower temperature, preferably less than 1200°C, since otherwise the combustion of sulfur and pure oxygen in stoichiometric quantities would produce an excessively high temperature (more than 5000°C). The combustion gas thus obtained may have about 80% of SO₂ (v/v), or more.

From the combustion chamber, the gas is cooled to about 180°C by its passage through the boiler. This produces steam, at about 4 bar, that preferably is used as a means of heating in the sulfur liquefaction tanks.

The combustion gas is cooled to about room temperature and purified to remove moisture and sulfur particles, preferably by passing through an air-cooled heat interchanger where it is cooled to 80°C and thereafter passing through a sulfuric acid absorption tower where it is cooled to room temperature, whereby moisture and sulfur particles are eliminated. The sulfuric acid used in the tower may be maintained at room temperature using a water-cooled heat interchanger. The gas, thus purified, is passed through a sulfuric acid drop trap.

To this point, the entire line described is at a negative pressure, since the gases are circulated by suction from a blower that pushes the gas mass towards the combustion furnace (70-95% of the mass, preferably about 80%) and towards a cooling plant (the remaining 5-30%, preferably about 20%).

From the cooling plant is obtained liquid SO₂, and a non-condensable gaseous mix of SO₂ and unused oxygen that is suctioned off by the negative pressure from the blower. The drop in temperature in this gaseous mix helps reduce the temperature of the combustion gas recirculated to the boiler combustion chamber even further. The entire gas circulation system is thus effected in a completely closed circuit.

In view of the high concentrations of SO₂ produced, high efficiencies of SO₂ recovery by liquefaction in the cooling plant can be achieved, depending on the different operating pressure and temperature conditions of the plant. For example, at 20°C and 0.8 bar it is possible to achieve a 95% recovery of the SO₂ contained in 80% SO₂ gas. That same recovery is possible with 80% SO₂ gas at 20°C and 3.4 bar, or at -10°C.

In one example, the combustion gas obtained would be comprised of approximately 16% oxygen and 84% of SO₂ (v/v). This latter percentage makes it very easy to liquefy SO₂ so that a 95% SO₂ recovery efficiency could be obtained at -10°C. The SO₂ content in the 84% SO₂ (v/v) gas could even be liquefied at 20°C, at 5 bar, thus increasing the system's efficiency even further.

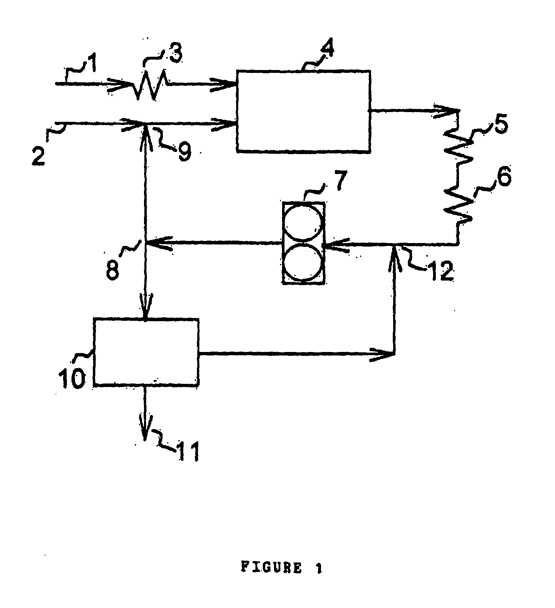

For further explanation of the invention, reference is made to the description provided below of a preferred embodiment in relation to Figure 1, which shows a generic preferred process diagram.

As shown in Figure 1, flow lines 1 and 2 correspond to sulfur and pure oxygen, respectively. The sulfur in flow line 1 is smelted in heat interchanger 3 and continues toward the sulfur burner in boiler 4. The combustion gas obtained in boiler 4, displaced by suction from blower 7, passes to an air interchanger 5 and then continues through a purifier/cooler 6. From blower 7, the mass of combustion gas is driven towards the fork point 8, where a portion of the gas is conveyed to mixing point 9, where oxygen fed in flow line 2 is incorporated, to convey the mix thus enriched towards boiler 4. The remaining portion of gas at fork point 8 is conveyed to cooling plant 10. A product stream 11 is obtained there in the form of liquid SO₂, leaving a non-condensable gaseous mix that is suctioned by the negative pressure of blower 7 and returned to the circuit via mixing point 12.

## Claims

1. A process for producing sulfur dioxide by the combustion of sulfur and pure oxygen, comprising the steps wherein:
elemental sulfur is smelted;
the smelted sulfur is combusted in the combustion chamber of a boiler, with pure oxygen diluted in cold combustion gas;
the combustion gas from the combustion chamber is cooled in the boiler;
the cooled combustion gas is further cooled and purified by being passed through a sulfuric acid absorption tower having sulfuric acid kept at room temperature, and through a sulfuric acid drop trap, to form a cold purified gas stream;
one portion of the cold purified gas stream is recirculated towards the combustion chamber for dilution of the pure oxygen;
the remaining portion of the cold purified gas stream is condensed in a cooling plant to produce liquid SO₂, and a non-condensable gaseous mix of SO₂ and unused oxygen,
wherein a blower drives the one portion and the remaining portion of the cold purified gas stream towards the combustion chamber and cooling plant, respectively, and the non-condensable gaseous mix is suctioned by the negative pressure of the blower and mixed with the cold purified gas stream, whereby the entire gas circulation system is conducted in a closed circuit.

2. A process according to claim 1, wherein the elemental sulfur is smelted and then combusted with pure oxygen diluted in cold combustion gas and the gas leaving the combustion chamber is kept at a temperature of less than 1200°C.

3. A process according to claim 1 or claim 2, wherein the combustion gas obtained is at least 80% SO₂ (v/v).

4. A process according to any preceding claim, wherein the combustion gas is purified and cooled to a temperature close to room temperature.

5. A process according to any preceding claim, wherein 70% to 95% of the cold purified gas stream is recirculated towards the combustion furnace and enriched with pure oxygen to maintain the combustion.

6. A process according to any preceding claim, wherein 5% to 30% of the cold purified gas stream is sent to the cooling plant to obtain the liquid SO₂ and the non-condensable gaseous mix of SO₂ and unused oxygen.

## Patentansprüche

1. Verfahren zur Herstellung von Schwefeldioxid durch Verbrennung von Schwefel und Reinsauerstoff, das folgende Schritte umfasst:
Schmelzen von elementarem Schwefel;
Verbrennung des geschmolzenen Schwefels in der Verbrennungskammer eines Kessels mit Reinsauerstoff, das in kaltem Verbrennungsgas verdünnt ist;
Kühlung des aus der Verbrennungskammer kommenden Verbrennungsgases im Kessel;
weitere Kühlung und Reinigung des gekühlten Verbrennungsgases, indem man es durch einen Absorptionsturm mit Schwefelsäure, in dem die Schwefelsäure bei Raumtemperatur gehalten wird, sowie durch einen Schwefelsäuretropfenabscheider leitet, wobei ein kalter gereinigter Gasstrom entsteht, und einen Teil des kalten gereinigten Gasstroms zwecks Verdünnung
es Reinsauerstoffs zur Verbrennungskammer zurückführt;
Kondensation des restlichen Teils des kalten gereinigten Gasstroms in einer Kühlanlage, wobei flüssiges SO₂ und eine nicht kondensierbare gasförmige Mischung aus SO₂ und unverbrauchtem Sauerstoff entsteht,
wobei der eine Teil bzw. der restliche Teil des kalten gereinigten Gasstroms mit einem Gebläse zur Verbrennungskammer bzw. zur Kühlanlage gefördert und die nicht kondensierbare gasförmige Mischung durch den Unterdruck des Gebläses angesaugt und mit dem kalten gereinigten Gasstrom gemischt wird, wodurch das gesamte Gaskreislaufsystem in einem geschlossenen Kreislauf geführt wird.

2. Verfahren nach Anspruch 1, wobei der elementare Schwefel geschmolzen und dann mit dem in kaltem Verbrennungsgas verdünntem Reinsauerstoff verbrannt wird und das aus der Verbrennungskammer austretende Gas bei einer Temperatur unterhalb 1200°C gehalten wird.

3. Verfahren nach Anspruch 1 oder 2, wobei das entstehende Verbrennungsgas zu mindestens 80% aus SO₂ (V/V) besteht.

4. Verfahren nach einem der vorhergehenden Ansprüche, wobei das Verbrennungsgas gereinigt und auf eine Temperatur nahe Raumtemperatur gekühlt wird.

5. Verfahren nach einem der vorhergehenden Ansprüche, wobei 70% bis 95% des kalten gereinigten Gasstroms zur Aufrechterhaltung der Verbrennung zur Verbrennungskammer zurückgeführt und mit Reinsauerstoff angereichert werden.

6. Verfahren nach einem der vorhergehenden Ansprüche, wobei 5% bis 30% des kalten gereinigten Gasstroms zur Gewinnung des flüssigem SO₂ und der nicht kondensierbaren Mischung aus SO₂ und unverbrauchtem Sauerstoff zur Kühlanlage geleitet werden.

## Revendications

1. Procédé permettant d'obtenir du bioxyde de soufre par combustion de soufre et d'oxygène pur, comportant les opérations suivantes :
On fait fondre du soufre élémentaire.
Le soufre fondu est brûlé dans la chambre de combustion d'une chaudière avec de l'oxygène pur dilué dans un gaz de combustion froid.
Le gaz de combustion de la chambre de combustion est refroidi dans la chaudière.
Le gaz de combustion refroidi est une fois de plus refroidi et purifié en le faisant passer par une tour d'absorption à l'acide sulfurique dont l'acide est conservé à la température ambiante et par une trappe à égouttage à l'acide sulfurique de manière à former un courant froid et purifié de gaz, une partie du courant froid et purifié de gaz étant recirculée vers la chambre de combustion de manière à obtenir la dilution de l'oxygène pur.
La partie restante du courant froid et purifié de gaz est condensée dans un système de refroidissement de manière à produire du SO₂ liquide et un mélange gazeux non condensable de SO₂ et d'oxygène non utilisé.
En même temps, un ventilateur entraîne la première partie et la partie restante du courant froid et purifié de gaz vers la chambre de combustion et le système de refroidissement respectivement, et le mélange gazeux non condensable est aspiré par la pression négative du ventilateur puis mélangé au courant froid et purifié de gaz et le système entier de circulation de gaz est entraîné dans un circuit fermé.

2. Procédé conformément à la revendication 1, selon lequel le soufre élémentaire est fondu puis brûlé avec de l'oxygène pur dilué dans un gaz de combustion froid et le gaz qui sort de la chambre de combustion est conservé à une température inférieure à 1200°C.

3. Procédé conformément à la revendication 1 ou à la revendication 2 selon lequel le gaz de combustion obtenu se compose à 80% au moins de SO₂ (v/v).

4. Procédé conformément à l'une des revendications précédentes selon lequel le gaz de combustion est purifié et refroidi à une température proche de la température ambiante.

5. Procédé conformément à l'une des revendications précédentes selon lequel de 70% à 95% du courant froid et purifié de gaz est recirculé vers le four de combustion et enrichi avec de l'oxygène pur afin de maintenir la combustion.

6. Procédé conformément à l'une des revendications précédentes selon lequel de 5% à 30% du courant froid et purifié de gaz sont dirigés vers le système de refroidissement afin d'obtenir du SO₂ liquide et un mélange gazeux non condensable de SO₂ et d'oxygène non utilisé.
